# EUROPEAN PATENT SPECIFICATION

(11) **EP 4 050 635 B1**
(45) Date of publication and mention of the grant of the patent: **15.11.2023**
(21) Application number: 21159196.1
(22) Date of filing: 25.02.2021
(51) Int. Cl.: H01H 33/666, H01H 33/56, H01H 31/00, H01H 33/14, H01H 33/662, H02B 13/035, H02B 13/045

(54) **SWITCHING DEVICE FOR ELECTRIC POWER DISTRIBUTION**
SCHALTVORRICHTUNG ZUR STROMVERTEILUNG
DISPOSITIF DE COMMUTATION POUR LA DISTRIBUTION D'ÉNERGIE ÉLECTRIQUE

(43) Date of publication of application: 31.08.2022
(73) Proprietor: Siemens Aktiengesellschaft, 80333 München (DE)
(72) Inventor: CHIKHALE, Ravindra, 403602 Goa (IN); JUNG, Wolfgang, 60435 Frankfurt (DE); SONAWANE, Mahesh, 410210 Navimumbai, Maharashtra (IN); SUNDIKAR, Sagar, 403726 Sancoale, Goa (IN)
(74) Representative: Patentanwaltskanzlei WILHELM & BECK

(56) References cited:
- US-A- 3 071 671
- US-A- 3 891 862
- US-A1- 2005 056 617

## Description

The present disclosure generally relates to electric power distribution, and more particularly to a switching device for opening and closing a circuit between a first electrical terminal and a second electrical terminal in electric power distribution.

A switching device (also commonly known as switchgear) is an apparatus used for controlling, regulating, and switching on and off the electrical circuit in electrical power distribution. The switching device is typically placed in both high and low voltage side of a power transformer, and is used for de-energizing the equipment for testing and maintenance and for clearing the fault. For instance, when the fault occurs in the electrical power distribution, heavy current flows through equipment due to which there is a risk that the equipment may get damaged, and the service also may get interrupted. Therefore, in order to protect the lines, generators, transformers and other electrical equipment from damage, automatic protective devices, such as the switchgear devices, are utilized.

The switching device needs to provide a high dielectric strength to withstand high voltages. In the case of switching device, and even other devices such as transformer (s), power line (s) (especially high-voltage electrical power transmission line (s)), busbar (s), circuit breaker, switch disconnector, earthing switch, (Switching) contactor (s), waveguides, etc., and where large electrical voltages (from about 1 kV and greater) and / or strong electric fields may occur, typically a gas or gas mixture for electrical insulation of the electrical active (i.e. exposed to electrical or a strong electric field exposed) parts is used. Gas insulation offers significantly improved dielectric strength compared to atmospheric air. In the switching device, the electrical contacts are sealed inside a tank with pressurized insulating gas.

The gas most commonly used as a switchgear insulating medium is Sulfur Hexafluoride (SF6). SF6 offers very good insulating properties (dielectric strength about 2.7 times better than air) as well as very good extinguishing properties (no conductive decomposition products). In addition, SF6 encapsulated systems provide a very high level of reliability, is chemically stable and lifetime (up to 30 years) and require only a very low level of maintenance. However, SF6 has a relatively high global warming potential (GWP) considered with respect to CO2. Due to its high global warming potential SF6 was included in the list of gases whose entry into the atmosphere is to be limited, according to the Kyoto Protocol of 1997. Further, during its working cycle, SF6 decomposes under electrical stress, forming toxic byproducts that are a health threat for working personnel in the event of exposure.

A particular type of switching device is a vacuum circuit interrupter apparatus which includes separable main contacts disposed in an insulated housing. Herein, the switchgear, typically, includes a bus-bar tank, a circuit-breaker tank, a transformer tank and a cable bushing tank which together forms a single-phase pole assembly. Such similar pole assemblies mounted together in adjacent layer will form the entire switchgear. The bus-bar tank consists of a three-position disconnector which is used to switch between the ON-OFF-EARTH positions respectively. The circuit-breaker tank consists of a vacuum interrupter which is used to connect and disconnect the circuit which is operated by means of spring-operated drive. The cable bushing tank is used to plug in the feeder cables for in feeding current. Traditionally, the tanks are sealed and are filled with pressurized SF6 gas. As SF6 gas has very good dielectric properties, it is possible to keep the clearance much closer within suitable dielectric rating of the switchgear.

Conventionally, one of the contacts is fixed relative to both the housing and to an external electrical conductor which is interconnected with the circuit to be controlled by the vacuum interrupter. The other main contact is movable and usually comprises a cylindrical stem having the contact at one end thereof enclosed in a vacuum chamber and a driving mechanism at the other end thereof external to the vacuum chamber. Often the electrical interconnection between the circuit to be protected by the circuit interrupter and the movable contact is made on the cylindrical stem. Further, a flexible connector is used for connecting the movable contact to the fixed contact. Typically, the flexible connector is made of a stack of flexible sheets of a conducting material and is constructed such that it can accommodate the movement of the movable contact. For example, the flexible connector is made from multiple copper foils of 0.1 millimeters thickness, which are brazed together to achieve the desired shape and thickness. The flexibility of the flexible connector ensures that there is always a contact between the movable contact and the stationary contact. Herein, the flexible connector connects electrical current carrying connection between the circuit-breaker tank and the bus-bar tank. In particular, the flexible connector is mechanically bolted at both ends by nut and bolts which forms rigid connection to bushing between the circuit-breaker tank and the bus-bar tank.

U.S. Patent No. 6,310,310 discloses a high voltage electric switch which includes an insulated housing with an opening therethrough and an interior surface. The housing has an upper open end and a lower open end. A conductive upper terminal pad has a downwardly extending bar, wherein the upper terminal pad encloses the upper open end. A vacuum interrupter has a stationary stem that is electrically connected to the bar, and a moving stem extending in a direction opposite the stationary stem. A dielectric material is permanently bonded to at least a portion of the vacuum interrupter and substantially fills any voids between the vacuum interrupter and the interior surface. The dielectric material and the vacuum interrupter are selectively removable from the housing when the upper terminal pad is removed. A moving end assembly is connected to the moving stem and includes a highly conductive outer sleeve which receives a high strength inner sleeve having a cross-hole therethrough. A flexible shunt assembly is connected to the outer sleeve with a conductive lower terminal pad substantially enclosing the lower open end. The lower terminal pad has an opening therethrough to allow access to the flexible shunt connected to the lower terminal pad. A pull rod axially extends through the lower terminal pad opening, wherein the pull rod is connected to a pin with a cross-pin slot. The pin is connected to the inner sleeve by a cross-pin received through the cross-hole and the cross-pin slot. An over-travel spring received within the inner sleeve and biasing the slotted pin attached to the pull rod. Axial movement of the pull rod axially moves the moving stem to connect or disconnect with the stationary stem within the vacuum interrupter.

U.S. Patent No. 5,530,216 A discloses a flexible connector for a circuit breaker. The flexible connector preferably, comprises a plurality of flexible sheets arranged in a stack. The stack defines an opening having an edge including at least one tab extending inwardly from the edge of the opening. The tabs are adapted to bend so that they make a secure interference fit with a movable contact so that current can flow directly from the movable contact into the flexible connector. A circuit interrupter system is also disclosed.

The publication US 2005/056617 A1 describes a switching device according to the preamble of claim 1.

As discussed, the flexible connection, used for electrically connecting the movable contact to the stationary contact, is bolted at both their ends. Such flexible connection typically has sharp edges, thus there is a possibility of dielectric flashovers due to change in insulating medium. Further, the need to bolt the flexible connection, especially at the top end requires access space which needs to be incorporated into the design of the switching device. Moreover, challenge is to keep minimum service or maintenance time during failure in switchgear to maintain high service reliability. Two major maintenance activities where more service time is involved in such conventional switchgear arrangement include, removing circuit-breaker tank from complete switchgear in the event of failure or malfunction inside thereof, and to access three position disconnector which is enclosed in the bus-bar tank.

In such traditional design configuration, for removing or replacement of the circuit-breaker tank on field installed switchgear panels, following steps need to follow: (i) recovering the SF6 gas from all phases of circuit-breaker tank; (ii) opening access cover, which needs to be disassembled, to have access to the flexible connector; (iii) unfastening bolts of the flexible connector at the bushing, as coupled therewith for electrical current carrying connections; and (iv) sliding down the circuit-breaker tank from the bushing, for removal from the switchgear. Similarly, with such traditional design configuration, to access three position disconnectors in event of fault or maintenance, following steps are involved: (i) recovering the SF6 gas from all phases of busbar tank; and (ii) opening a top busbar compartment cover to access the three-position disconnector.

Herein, unfastening bolts of the flexible connector is a cumbersome process due to the lack of space inside the circuit-breaker tank for the personnel to access the end of the flexible connector. Further, recovering the SF6 gas includes vacuum process, which takes considerable time and need specialized tools. Thus, with the traditional design configuration, servicing and maintenance activities for the known switchgears require significant time and effort which is not desirable, and thus reduces service reliability of traditional switchgears. Hence, there is a need to develop an improved arrangement for switching device which can safely work within the limitations of dielectric strength of new type of insulating gases being employed, while having increased service reliability.

One object of the present invention is to provide a switching device for electric power distribution which has simplified assembly and disassembly for increased service reliability, and can work with clean air insulating medium, such as SF6 free gases, like mixture of carbon dioxide gas and nitrogen gas.

The object of the present invention is achieved by a switching device for opening and closing a circuit between a first electrical terminal and a second electrical terminal. The switching device comprises an enclosure filled with an insulating gas. The switching device comprises a bus-bar tank having a first end. The bus-bar tank is filled with an insulating gas. The switching device comprises a bushing coupled to the first end of the bus-bar tank. The switching device also comprises a circuit-breaker tank having a first end. The circuit-breaker tank is also filled with the insulating gas. The switching device further comprises a stationary contact supported by the bushing. The stationary contact is adapted to be disposed in electrical connection with the first electrical terminal in the bus-bar tank. The switching device also comprises a circuit-breaker arrangement arranged inside the circuit-breaker tank. The circuit-breaker arrangement is adapted to be disposed in electrical connection with the second electrical terminal therein. Herein, a fastening arrangement is adapted to establish physical connection between the first end of the circuit-breaker tank and the bushing, to removably assemble the bus-bar tank and the circuit-breaker tank. Further, the circuit-breaker arrangement is adapted to extend into the bushing, and to be disposed in contact with the stationary contact therein, when the bus-bar tank is assembled to the circuit-breaker tank.

In an embodiment, the circuit-breaker arrangement comprises a movable contact adapted to be disposed in electrical connection with the second electrical terminal in the circuit-breaker tank. The circuit-breaker arrangement also comprises an actuating arrangement configured to reciprocate the movable contact to move linearly inside the circuit-breaker tank to be disposed between a first position and a second position. The circuit-breaker arrangement further comprises a rigid conductive member having a first end and a second end. Herein, the rigid conductive member is fixedly connected, at the first end thereof, to the movable contact to reciprocate therewith. The rigid conductive member is adapted to engage in electrical connection with the stationary contact at the second end thereof, when the movable contact is in the first position to electrically connect the first electrical terminal and the second electrical terminal. Such arrangement ensures that there is no need for any physical connection, using bolts or the like, between components of the circuit-breaker tank and the bus-bar tank for disposing the first electrical terminal and the second electrical terminal in electrical connection, thus resulting in an easy assembly and disassembly of the circuit-breaker tank and the bus-bar tank as and when required.

In an embodiment, the bus-bar tank comprises an access cover removably fastened thereto. The access cover is removed from the bus-bar tank to easily access inside of the bus-bar tank for any service or maintenance activity therein.

In an embodiment, the circuit-breaker tank comprises an access cover removably fastened thereto. The access cover is removed from the circuit-breaker tank to easily access inside of the circuit-breaker tank for any service or maintenance activity therein.

In an embodiment, the switching device further comprises a cable bushing tank housing the second electrical terminal. The cable bushing tank comprises a conductor disposed in electrical connection with the second electrical terminal and extending out from the cable bushing tank. The switching device also includes a transformer tank supported over and coupled to the cable bushing tank. The transformer tank is adapted to receive the conductor therein. The switching device further includes a second bushing adapted to removably assemble the transformer tank and the circuit-breaker tank, using a fastening arrangement. Herein, the conductor is disposed in electrical connection to the movable contact through the second bushing.

In an embodiment, the conductor is cylindrical in shape.

In an embodiment, the bushing is annular in shape. The annular shape of the bushing complements circular shape of the first end of the bus-bar tank and the first end of the circuit-breaker tank, and thus allow for easy assembly and disassembly of the bus-bar tank and the circuit-breaker tank.

In an embodiment, the insulating gas is Sulfur hexafluoride (SF6) free gas. Such insulating gas allows it to be dispersed into the ambient atmosphere without any threat to environment and/or working personnel, thus eliminating the need of recovering the gas using vacuum process as in traditional designs and thereby reducing the service time.

In an embodiment, the insulating gas is an eco-friendly insulating gas comprising a mixture of carbon dioxide gas and nitrogen gas. Such eco-friendly insulating gas allows it to be dispersed into the ambient atmosphere without any threat to environment and/or working personnel, thus eliminating the need of recovering the gas using vacuum process as in traditional designs and thereby reducing the service time.

In another aspect, a method of servicing the bus-bar tank in the switching device is provided. The method comprises un-bolting the first end of the circuit-breaker tank from the first bushing by removing the fastening arrangement, to disassemble the bus-bar tank from the circuit-breaker tank; and removing the access cover from the bus-bar tank to gain access thereinto, for servicing thereof.

In yet another aspect, a method of servicing the circuit-breaker tank in the switching device is provided. The method comprises un-bolting the first end of the circuit-breaker tank from the first bushing by removing the fastening arrangement, to disassemble the circuit-breaker tank from the bus-bar tank; and removing the access cover from the circuit-breaker tank to gain access thereinto, for servicing thereof.

In still another aspect, a method of servicing one or more of the transformer tank and the cable bushing tank in the switching device is provided. The method comprises un-bolting the transformer tank from the second bushing by removing the fastening arrangement, to disassemble the transformer tank and the cable bushing tank from the circuit-breaker tank.

The object of the present invention is further achieved by a method of assembling a switching device. The method comprises providing a bus-bar tank having a first end, with a bushing coupled thereto at the first end thereof. The method also comprises supporting a stationary contact by the bushing, with the stationary contact adapted to be disposed in electrical connection with a first electrical terminal in the bus-bar tank. The method further comprises providing a circuit-breaker tank having a first end. The method further comprises arranging a circuit-breaker arrangement inside the circuit-breaker tank, with the circuit-breaker arrangement adapted to be disposed in electrical connection with a second electrical terminal in the circuit-breaker tank. The method further comprises removably assembling the bus-bar tank and the circuit-breaker tank, by bolting the first end of the circuit-breaker tank to the bushing using a fastening arrangement, such that the circuit-breaker arrangement is adapted to extend into the bushing, when the bus-bar tank is assembled to the circuit-breaker tank, to be disposed in contact with the stationary contact therein. The method further comprises filling the bus-bar tank and the circuit-breaker tank with an insulating gas.

The method of assembling the switching device further comprises providing cable bushing tank housing a second electrical terminal, the cable bushing tank comprising a conductor disposed in electrical connection with the second electrical terminal and extending out from the cable bushing tank; providing a transformer tank supported over and coupled to the cable bushing tank, the transformer tank adapted to receive the conductor therein; removably assembling the transformer tank and the circuit-breaker tank by a second bushing, using a fastening arrangement; and disposing the conductor in electrical connection to the movable contact through the second bushing.

Other aspects, features, and advantages of the present disclosure are readily apparent from the following detailed description, simply by illustrating a number of particular embodiments and implementations, including the best mode contemplated for carrying out the present disclosure. The present disclosure is also capable of other and different embodiments, and its several details can be modified in various obvious respects, all without departing from the scope of the present disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
- FIG 1: is a diagrammatic perspective view representation of a switching device, in accordance with an embodiment of the present disclosure;
- FIG 2: is a diagrammatic perspective view representation of a pole assembly of the switching device of FIG 1, in accordance with an embodiment of the present disclosure;
- FIG 3A: is a diagrammatic cross-sectional view representation of the pole assembly of FIG 2, in accordance with an embodiment of the present disclosure;
- FIG 3B: is an enlarged view representation of a section of the pole assembly of FIG 3A, in accordance with an embodiment of the present disclosure;
- FIG 4A: is a diagrammatic partial cross-sectional view representation of a pole assembly of a switching device, in accordance with the prior-art;
- FIG 4B: is an enlarged view representation of a section of the pole assembly of the switching device of FIG 4A, in accordance with the prior-art;
- FIG 5: is a disassembled view representation of the pole assembly of the switching device of FIG 2, in accordance with an embodiment of the present disclosure; and
- FIG 6: is a flowchart listing steps involved in a method of assembling a switching device, in accordance with an embodiment of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It is apparent, however, to one skilled in the art that the embodiments of the present disclosure may be practiced without these specific details or with an equivalent arrangement. In other instances, well-known structures and devices are shown in block diagram form in order to avoid unnecessarily obscuring the embodiments of the present disclosure.

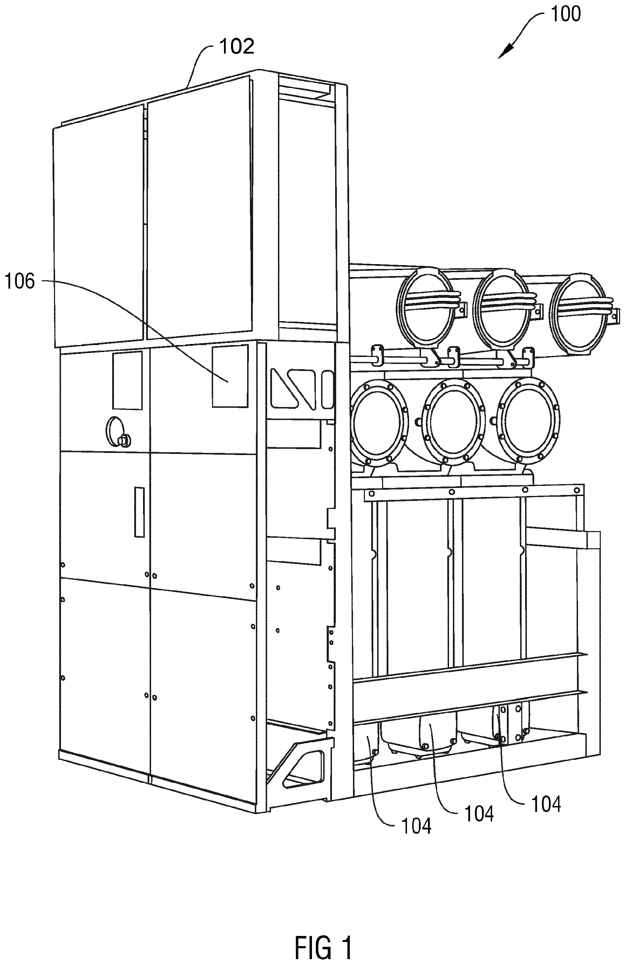

Example embodiments of a switching device described herein is a vacuum interrupter based switchgear which may be included in a medium voltage switchgear unit. Such switching device can be used in several different applications, for instance, for capacitor switching or for sectionalizing a line or system of switches. The switching device may also be molded into a "load break" elbow connector to interrupt currents of medium voltage distribution systems. The switching device may be connected to a generator or to a consumer line, in which the generator or the consumer line is disconnectable from or connectable to the energy line by means of the switching device, as per the embodiments of the present disclosure. In the present embodiments, the switching device may be implemented as a gas-insulated switchgear, a vacuum interrupter or an air-break disconnector. Examples of the switching device as per the embodiments of the present disclosure has been fully described with reference to FIGS 1, 2 and 3A-3B herein.

FIG 1 is a diagrammatic perspective view representation of an exemplary switching device 100, in accordance with one or more embodiments of the present disclosure. In the present illustration, the depicted switching device 100 is a three-phase medium voltage switchgear, that is to say the switching device 100 has a plurality of phase conductor sections, which are used to transmit electrical power by means of a polyphase electrical power system. In the present case, the switching device 100 and further modules of the switching device 100, and therefore the entire polyphase switching device 100, are designed for three phases; however it may be contemplated that for the purposes of the present disclosure, the switching device 100 may be a single phase or any other type of switchgear as known in the art. As illustrated, the switching device 100 includes a housing 102 supporting three pole assemblies 104 therein, with each pole assembly 104 (sometimes, simply referred to as a pole 104) responsible for a single phase in the three-phase switching device 100 of the present disclosure. The switching device 100 may further include a control panel (generally represented by the numeral 106) which acts on a switching shaft (not shown) common to all the poles 104 of the switching device 100.

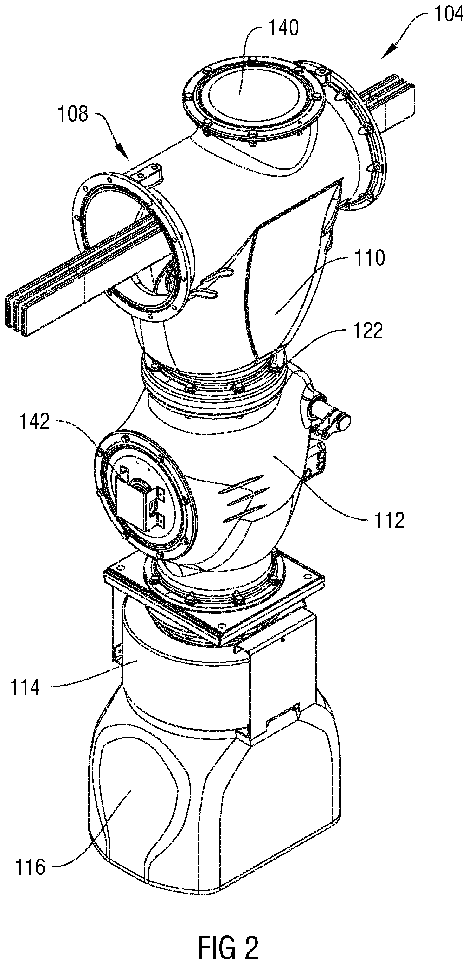

FIG 2 is a diagrammatic perspective view representation of the pole assembly 104 of the switching device 100, in accordance with an embodiment of the present disclosure. The pole assembly 104 includes an enclosure 108. The enclosure 108 is generally hollow and may have any suitable shape based on the design and configuration of the switching device 100. Herein, the enclosure 108 is typically grounded during operation, i.e. electrically connected to earth. Advantageously, the enclosure 108 is made of a suitable electrically conductive material, e.g. aluminum, such as cast aluminum. Casting, or molding, an aluminum enclosure is a non-expensive procedure. However, the enclosure 108 can also be made of copper, zinc or any other suitable electrically conductive material.

In the switching device 100, the enclosure 108 is filled with an insulating gas. In the present embodiments, the insulating gas is sulfur hexafluoride (SF6) free gas. In a particular embodiment, the insulating gas is an eco-friendly insulating gas comprising a mixture of carbon dioxide gas and nitrogen gas. In one example, the insulating gas may have carbon dioxide gas and nitrogen gas in a ratio of 20:80. In another example, the insulating gas may have carbon dioxide gas and nitrogen gas in a ratio of 40:60. It may be appreciated that the given ratios are exemplary only and shall not be construed as limiting to the present disclosure in any manner. Altematively, as a gaseous insulating medium, various insulating gases, in particular hydrofluoroolefins, perfluoroketones, perfluoronitriles, hydrofluoroxiranes, perfluoroxiranes, hydrofluoroethers, perfluoroether, or a mixture of said gases may be utilized. These are media which, at the operating temperature of the high or medium-voltage arrangements, are generally gaseous, or liquid and gaseous with a gaseous fraction having a high dielectric strength. It may be understood that in order to accommodate the insulating gas, the enclosure 108 is sealed and in turn may preferably be made of a material which is gas-impermeable, such as glass, polymers or resins.

In some examples, a filler material (not shown) may be provided in the housing 102 (as shown in FIG 1), surrounding the enclosure 108 filled with the gaseous insulating medium, with the filler material having preferably a higher specific permittivity as compared to the enclosure 108 filled with the gaseous insulating medium. This relationship reduces dielectric requirements for the insulating gas, because the electric field is increased in areas of low electrical permittivity over areas of high dielectric permittivity. The filler material may be a liquid dielectric, a solid dielectric, but also supercritical fluids, suspensions, in particular colloids or other mixed-phase substances. A liquid fluid may in particular be an oil based on fluorinated hydrocarbons or a silicone oil. A solid fluid may be a polymer or a resin. In principle, the filler material may also be a gas which has a higher dielectric strength than the gaseous insulating medium in the hollow enclosure 108. In this case, it is not necessary that the filler material has a higher dielectric permittivity than the hollow spheres with the gaseous insulating medium.

In some implementations, an outer shape, or an outer geometry, of the enclosure 108 is smooth to distribute the electric field generated by the voltage through the switching device 100. The outer surface of the enclosure 108 is designed to be smooth to distribute the electric field generated by the current through the switching device 100. The outer surface of the enclosure 108 is smooth in that the enclosure 108 does not have an angular outer shape and is without roughness. That is, the outer surface of the enclosure 108 is smooth in that the outer surface has no roughness, sharp projections or sharp indentations.

As illustrated in FIG 2, the enclosure 108 is generally divided, such that each pole 104 of the switching device 100 includes a bus-bar tank 110, a circuit-breaker tank 112, a transformer tank 114 (also known as current transformer) and a cable bushing tank 116. It may be appreciated that each of the bus-bar tank 110, the circuit-breaker tank 112, the transformer tank 114 and the cable bushing tank 116 forms a part or a section of the enclosure 108 of the switching device 100. Hereinafter, the various components and assemblies of the bus-bar tank 110, the circuit-breaker tank 112, the transformer tank 114 and the cable bushing tank 116 have been described generally being part of the pole assembly 104 and/or the switching device 100 without any limitations. As discussed, it may be understood that the enclosure 108, with all the sections therein, is filled with the insulating gas. That is, each of the bus-bar tank 110, the circuit-breaker tank 112, the transformer tank 114 and the cable bushing tank 116 therein, is filled with the insulating gas as described above.

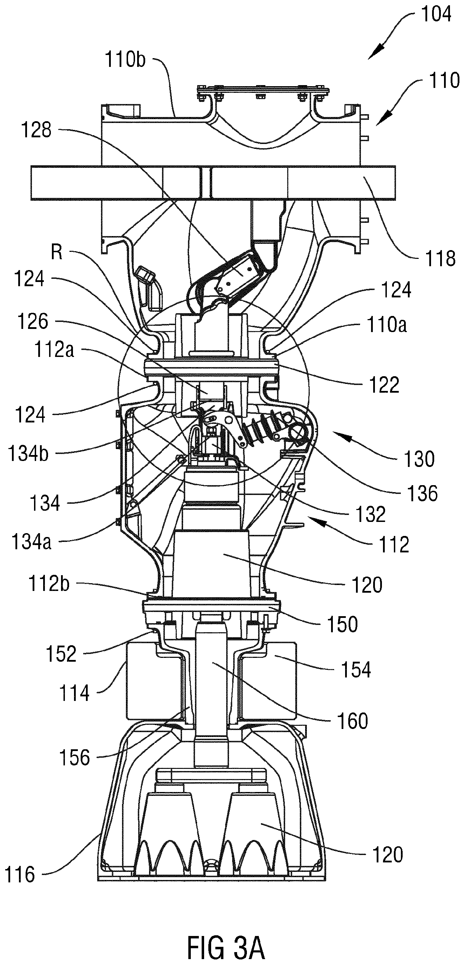

FIG 3A is a diagrammatic partial cross-sectional view representation of the pole assembly 104 of the switching device 100, in accordance with an embodiment of the present disclosure. Referring to FIG 2 and FIG 3A in combination, as illustrated, the pole assembly 104 includes a first electrical terminal 118 and a second electrical terminal 120 of the switching device 100. Typically, the first electrical terminal 118 is received generally in the bus-bar tank 110; and the second electrical terminal 120 is received generally in the cable bushing tank 116, extending into the circuit-breaker tank 112 (as shown). It may be appreciated that the first electrical terminal 118 and the second electrical terminal 120 may each include multiple electrical lines based on the design and configuration (e.g., multi-phase configuration) of the switching device 100. In some examples, the first electrical terminal 118 and the second electrical terminal 120 may be busbars, but can also be in the form of any other electrical conductor without any limitations. In particular, the first electrical terminal 118 and the second electrical terminal 120 may include a number of electrical bushings (not shown) penetrating into the respective bus-bar tank 110 and the cable bushing tank 116, one for each phase of a plural phase system. The bushings may be brazed in end covers. On the outside of the enclosure 108, the first electrical terminal 118 and the second electrical terminal 120 are connected to cables (not shown) which either connect the switching device 100 to a load or to a medium or high voltage power distribution line. In some examples, the first electrical terminal 118 and the second electrical terminal 120 may each engage a fitting (not shown) to join the power cables of the power distribution line.

In the switching device 100, generally, each of the bus-bar tank 110 and the circuit-breaker tank 112 have a substantially hollow spherical shape. As illustrated in FIG 2 and also in FIG 3A, the bus-bar tank 110 has a first end 110a and a second end 11 0b. Similarly, the circuit-breaker tank 112 has a first end 112a and a second end 112b. Herein, the first end 110a of the bus-bar tank 110 and the first end 112a of the circuit-breaker tank 112 provide respective circular openings to allow for components from one of the sections to extend into the other section, as may be required for establishing electrical connection, for opening and closing a circuit between the first electrical terminal 118 and the second electrical terminal 120, in the electrical power distribution, by the switching device 100.

Further, as illustrated, the switching device 100 includes a first bushing 122 coupled to the first end 110a of the bus-bar tank 110. In the present embodiments, the first bushing 122 is annular in shape, complementary to the circular shape of the first end 110a of the bus-bar tank 110. According to the present invention, a fastening arrangement (generally referred by the numeral 124) is adapted to establish physical connection between the first end 112a of the circuit-breaker tank 112 and the first bushing 122, to removably assemble the bus-bar tank 110 and the circuit-breaker tank 112. As may be seen from FIG 2 and FIG 3A, the first end 110a of the bus-bar tank 110 and the first end 112a of the circuit-breaker tank 112 have enlarged diameter to provide an extended portion for establishing proper contact with the first bushing 122. In the present design configuration, the fastening arrangement 124 may include bolts which may pass through the said extended portions for coupling the first bushing 122, and thereby the bus-bar tank 110 and the circuit-breaker tank 112. It may be appreciated that the fastening arrangement 124 is generally located external to the enclosure 108, without any or much hindrance. This allows for relatively easy assembly and disassembly of the bus-bar tank 110 and the circuit-breaker tank 112, as may be required for maintenance and service activities of the switching device 100. Also, as shown, the circuit-breaker tank 112 is connected to the transformer tank 114 from the second end 112b thereof. In some examples, the circuit-breaker tank 112 and the transformer tank 114 may have another bushing therebetween (as shown) to facilitate coupling thereof.

Further, as illustrated, the switching device 100 includes a stationary contact 126 supported by the first bushing 122. In the present embodiments, the stationary contact 126 is partially accommodated in the first bushing 122. As may be seen in FIG 3A, the stationary contact 126 is extending into the bus-bar tank 110. Herein, the stationary contact 126 is adapted to be disposed in electrical connection with the first electrical terminal 118 in the bus-bar tank 110. In particular, the bus-bar tank 110 includes a blade switch 128 which is pivotally connected to the stationary contact 126. The blade switch 128 is rotated about the stationary contact 126 to be disposed in one of three positions, an ON position in which the blade switch 128 is in contact with an ON switch (which, in turn, is connected to the first electrical terminal 118) to dispose the circuit in ON state, an EARTH position in which the blade switch 128 is in contact with the enclosure 108 (which is grounded) to dispose the circuit in EARTH state, and an OFF position in which the blade switch 128 is not in contact with any component, but insulated by the insulating gas in the bus-bar tank 110, to dispose the circuit in OFF state. In the present illustration, the blade switch 128 is shown to be in contact with the ON switch, disposing the circuit in the ON state. Such configuration is known in the art and thus has not been described in further detail for the brevity of the present disclosure.

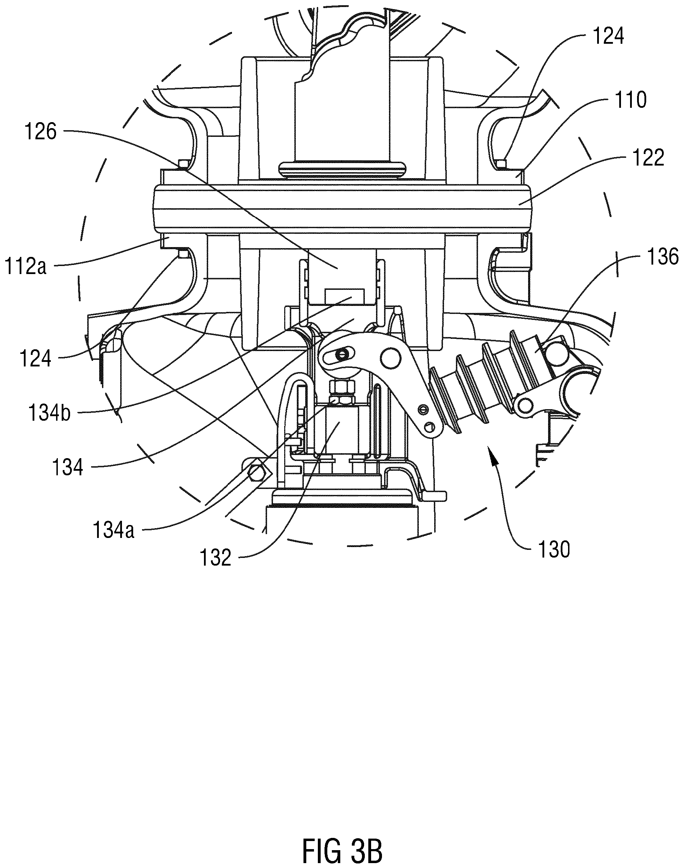

FIG 3B is an enlarged view representation of a section 'R' of the pole assembly 104 of FIG 3A, in accordance with an embodiment of the present disclosure. Referring to FIGS 3A and 3B in combination, provided are diagrammatic representations of the pole assembly 104 with a section of the enclosure 108 removed for depicting components arranged therein. In the present illustrations, the switching device 100 is depicted to be disposed in its closed-circuit configuration. As illustrated, the switching device 100 includes a circuit-breaker arrangement 130 arranged inside the circuit-breaker tank 112. The circuit-breaker arrangement 130 is adapted to be disposed in electrical connection with the second electrical terminal 120 in the switching device 100. This way the circuit-breaker arrangement 130 is implemented for opening and closing a circuit between the first electrical terminal 118 and the second electrical terminal 120 of the switching device 100. In particular, the circuit-breaker arrangement 130 is adapted to extend into the first bushing 122, and to be disposed in contact with the stationary contact 126 therein, when the bus-bar tank 110 is assembled to the circuit-breaker tank 112, as described further in detail in the proceeding paragraphs.

As illustrated, the circuit-breaker arrangement 130 includes a movable contact (generally referred by numeral 132) arranged inside the circuit-breaker tank 112. Typically, as illustrated, the stationary contact 126 is generally located at a top region of the circuit-breaker tank 112, and the movable contact 132 is generally located at a bottom region of the circuit-breaker tank 112. Specifically, the stationary contact 126 may be disposed on a terminal end of the first electrical terminal 118 and the moveable contact 132 may be mounted on a contact support associated with the second electrical terminal 120, of the switching device 100. In one example, the stationary contact 126 and the movable contact 132 may have contact points formed from copperimpregnated tungsten. Herein, the stationary contact 126 is disposed in electrical connection with the first electrical terminal 118 and the movable contact 132 is disposed in electrical connection with the second electrical terminal 120; such that when the stationary contact 126 and the movable contact 132 are in contact with each other, the circuit between the first electrical terminal 118 and the second electrical terminal 120 is disposed in closed configuration, and when the stationary contact 126 and the movable contact 132 are not in contact with each other, the circuit between the first electrical terminal 118 and the second electrical terminal 120 is disposed in open configuration.

In the present embodiments, the movable contact 132 is a vacuum interrupter unit; the two terms being interchangeably used and the vacuum interrupter unit being also referred by the numeral 132 hereinafter. The vacuum interrupter unit 132 has a generally cylindrical shape and has ribbed sections on its outer surface. The term "generally cylindrical" is used to mean that a housing of the vacuum interrupter unit 132 is substantially cylindrical but not necessarily of circular crosssection. Other less preferred cross-sections may be employed, if desired. The vacuum interrupter unit 132 is aligned substantially coaxially to a central axis of the enclosure 108. As may be contemplated, the vacuum interrupter unit 132 may generally be extending in upward direction towards the stationary contact 126 disposed in the top region of the enclosure 108.

According to embodiments of the present disclosure, the switching device 100 includes a rigid conductive member 134. The rigid conductive member 134 has a first end 134a and a second end 134b. The rigid conductive member 134 is fixedly connected to the vacuum interrupter unit 132 at the first end 134a thereof. Generally, the rigid conductive member 134 has a hollow cylindrical shape. Herein, the cross-sectional shape of the rigid conductive member 134 is designed to be complementary to the shape of the vacuum interrupter unit 132, such that the rigid conductive member 134 can slidably be received onto the vacuum interrupter unit 132. In some examples, the rigid conductive member 134 is bolted to the vacuum interrupter unit 132 by means of fasteners. For the purposes of the present disclosure, the rigid conductive member 134 is formed of copper material. Generally, the rigid conductive member 134 may be formed of any suitable conductive material with high current transfer characteristics known in the art without any limitations.

In the switching device 100, the vacuum interrupter unit 132 is adapted to move linearly inside the enclosure 108. As illustrated in FIGS 3A and 3B, the switching device 100 includes an actuating arrangement 136 configured to reciprocate the vacuum interrupter unit 132 to move linearly inside the enclosure 108 to be disposed between a first position and a second position. In one or more embodiments, the actuating arrangement 136 includes a rotary to linear conversion mechanism. Specifically, the actuating arrangement 136 includes a slider-crank mechanism. Herein, the actuating arrangement 136 is connected to a rotating shaft (not shown) extending from outside into the enclosure 108 to provide input rotations, to be converted into reciprocating linear movement of the vacuum interrupter unit 132 inside the enclosure 108. Such actuating arrangement 136 may be contemplated from the associated drawings by a person skilled in the art and thus has not been described in detail herein for the brevity of the present disclosure.

In the present embodiments, with the rigid conductive member 134 being fixed to the vacuum interrupter unit 132, the rigid conductive member 134 is adapted to move linearly, along with the vacuum interrupter unit 132, inside the enclosure 108. With its linear movement, the rigid conductive member 134 is adapted to engage in electrical connection with the stationary contact 126 at the second end 134b thereof, when the movable contact 132 is in the first position to dispose the switching device 100 in a closed circuit configuration. When the movable contact 132 is in the second position, the switching device 100 is disposed in an open circuit configuration. It may be understood that the stationary contact 126 is also cylindrical with cross-sectional diameter being slightly smaller than an inner diameter of the hollow cylindrical rigid conductive member 134, so as to allow the rigid conductive member 134 to slide thereover and being disposed in electrical connection therewith, when the movable contact 132 is in the first position to dispose the switching device 100 in the closed circuit configuration.

Referring further to FIGS 3A and 3B in combination, as illustrated, the bus-bar tank 110 includes an access cover 140 removably fastened thereto. Typically, the access cover 140 may be provided to cover an opening at the second end 110b of the bus-bar tank 110. The access cover 140 may be removed to access the said opening at the second end 110b of the bus-bar tank 110, so as to allow the personnel to reach the stationary contact 126 and/or the blade switch 128 for performing servicing and maintenance thereof. In some examples, the access cover 140 may also be removed to vent out and disperse the insulating gas in the bus-bar tank 110. In other examples, the bus-bar tank 110 may include a valve (not shown) to vent out the insulating gas before removing the access cover 140, to avoid pressure release of the insulating gas.

Similarly, as illustrated, the circuit-breaker tank 112 includes an access cover 142 removably fastened thereto. Typically, the access cover 142 may be provided to cover an opening at a side of the circuit-breaker tank 112. The access cover 142 may be removed to access the said opening at the side of the circuit-breaker tank 112, so as to allow the personnel to reach the circuit-breaker arrangement 130 for performing servicing and maintenance thereof. In some examples, the access cover 142 may also be removed to vent out and disperse the insulating gas in the circuit-breaker tank 112. In other examples, the circuit-breaker tank 112 may include a valve (not shown) to vent out the insulating gas before removing the access cover 142, to avoid pressure release of the insulating gas.

Also, as illustrated in FIG 3A, the cable bushing tank 116 houses the second electrical terminal 120, of the switching device 100. The transformer tank 114 is supported over and coupled to the cable bushing tank 116. In some examples, the transformer tank 114 may be coupled to the cable bushing tank 116 using a fixing arrangement (not shown). The switching device 100 further includes a second bushing 150 adapted to removably assemble the transformer tank 114 and the circuit-breaker tank 112. The second bushing 150 may couple the transformer tank 114 and the circuit-breaker tank 112 using a fastening arrangement 152. Further, as illustrated, the transformer tank 114 includes a current transformer 154, which may generally have a hollow cylindrical shape. The transformer tank 114 may further include an insulation foam 156 disposed inside thereof. Herein, as shown, the cable bushing tank 116 includes a conductor 160 disposed in electrical connection with the second electrical terminal 120. The use of insulation foam 156, as placed around the conductor 160 in the transformer tank 114, helps to keep smaller distance between the current transformer 154 and the conductor 160.

The conductor 160 is cylindrical in shape. As shown, the conductor 160 extends out from the cable bushing tank 116, and the transformer tank 114 is adapted to receive the conductor 160 therein. The conductor 160 may extend through the transformer tank 114 into the second bushing 150. In the embodiments of the present disclosure, the conductor 160 is disposed in electrical connection to the movable contact 132 through the second bushing 150. In the present embodiments, the conductor 160 has a sliding contact with the movable contact 132, for disposing for opening and closing the circuit between the first electrical terminal 118 and the second electrical terminal 120, in the switching device 100. In one or more embodiments, the switching device 100 may have a rounded connection (not shown) disposed in the second bushing 150 to form electrical contact with the insulator 160. Such sliding contact arrangement makes it possible for the connection area to have circular shape, which, in turn, helps to achieve dielectric rating.

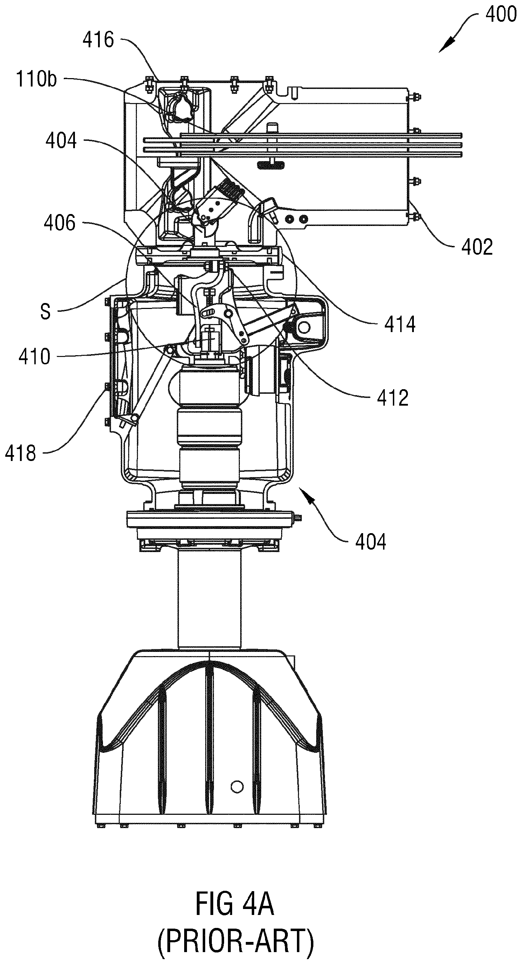

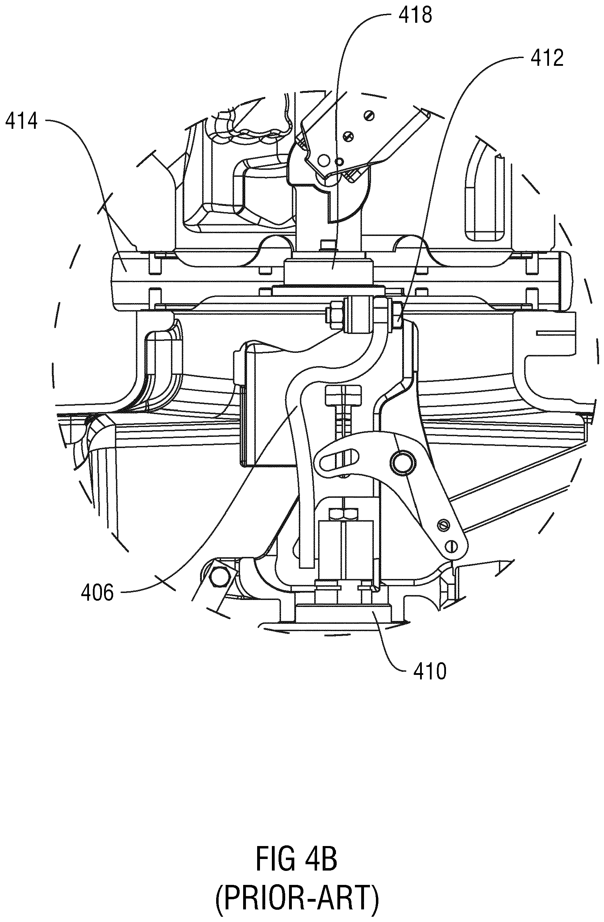

FIG 4A is a diagrammatic partial cross-sectional view representation of a pole assembly of a switching device 400; and FIG 4B is an enlarged view representation of a section 'S' of the pole assembly of the switching device 400 of FIG 4A, in accordance with the prior-art. Referring to FIGS 4A and 4B, as illustrated, the switching device 400 of the prior-art with a bus-bar tank 402 and a circuit-breaker tank 404, implements a flexible connector 406 for establishing electrical contact between a stationary contact 408 and a movable contact 410 therein. Such flexible connector 406 is mechanically bolted via fasteners 412 to a bushing 414 of the bus-bar tank 402. Further, such switching device 400 of the prior-art generally use SF6 gas as insulating medium, which is filled in the bus-bar tank 402 and the circuit-breaker tank 404. Such switching device 400 of the prior-art may also include an access cover 416 for the bus-bar tank 402 and an access cover 418 for the circuit-breaker tank 404.

In such design configuration for the switching device 400 of the prior-art, for removing or replacement of the circuit-breaker tank 404, following steps need to follow: (i) recovering the SF6 gas from all phases of circuit-breaker tank 404; (ii) opening access cover 418, which needs to be disassembled, to have access to the flexible connector 406; (iii) unfastening bolts 412 of the flexible connector 406 at the bushing 414, as coupled therewith for electrical current carrying connections; and (iv) sliding down the circuit-breaker tank 404 from the bushing 414, for removal from the bus-bar tank 402. Similar way with such design configuration for the switching device 400 of the prior-art, to access, for example, the stationary contact 408 in event of fault or maintenance, following steps are involved: (i) recovering the SF6 gas from all phases of bus-bar tank 402; and (ii) opening the access cover 416 to access the stationary contact 408.

With the design configuration for the switching device 400 of the prior-art, unfastening bolts 412 of the flexible connector 406 is a cumbersome process due to the lack of space inside the circuit-breaker tank 404 for the personnel to access the end of the flexible connector 406. Further, recovering the SF6 gas includes vacuum process, which takes considerable time and need specialized tools. Thus, with the traditional design configuration, servicing and maintenance activities for the known switchgears require significant time and effort which is not desirable, and thus reduces service reliability of traditional switchgears.

The switching device 100 of the present disclosure replaces the flexible connector as used for electrical engagement of the movable contact with stationary contact in the prior-art with the rigid conductive member 134 as disclosed herein. The use of rigid conductive member 134 reduces the possibility of dielectric flashovers at the stationary (disconnector) contact due to change in insulating medium like the presently used mixture of carbon dioxide gas (CO2) and nitrogen gas (N2), instead of SF6, while still achieving dielectric test values similar to SF6 products for, for example, 36kv rating of the electrical switchgear. The present switching device 100 is capable of transferring high current in compact space using the same kinematics currently employed.

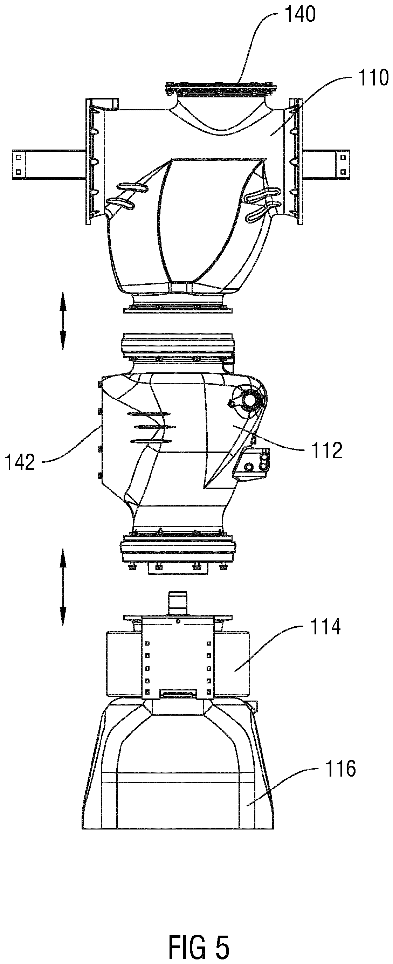

Referring back to FIGS 3A and 3B (in combination) and further to FIG 5, it may be appreciated that with the present design, servicing the bus-bar tank 110 and/or the circuit-breaker tank 112 can be achieved in much simpler fashion as compared with the design configuration for the switching device of the prior-art (as described above). In the present embodiments, the method of servicing the bus-bar tank 110 in the switching device 100 includes un-bolting the first end 112b of the circuit-breaker tank 112 from the first bushing 122 by removing the fastening arrangement 124, to disassemble the bus-bar tank 110 from the circuit-breaker tank 112; and removing the access cover 140 from the bus-bar tank 110 to gain access thereinto, for servicing thereof. Similarly, in the present embodiments, the method of servicing the circuit-breaker tank 112 in the switching device 100 includes un-bolting the first end 112a of the circuit-breaker tank 112 from the first bushing 122 by removing the fastening arrangement 124, to disassemble the circuit-breaker tank 112 from the bus-bar tank 110; and removing the access cover 142 from the circuit-breaker tank 112 to gain access thereinto, for servicing thereof. With this new arrangement as explained above, a smaller number of steps would be involved in servicing, removal or replacement of either one of the bus-bar tank 110 and the circuit-breaker tank 112, which drastically reduce the service time for the switching device 100.

Furthermore, as may be understood from FIGS 3A and 3B (in combination) and FIG 5, the sliding arrangement of the conductor 160, for disposing electrical connection between the second electrical terminal 120 in the cable bushing tank 116, and the first terminal 118 in the bus-bar tank 110 via the movable contact 132, allows for easy disassembly of one or more of the transformer tank 114 and the cable bushing tank 116 in the switching device 100. For this purpose, the fastening arrangement 152 may be un-bolted to disassemble the transformer tank 114 from the second bushing 150, which could then be slide out therefrom. Similarly, the cable bushing tank 116 may be slide out from the transformer tank 114 by removing the fixing arrangement, as discussed. Herein, the method of servicing one or more of the transformer tank 114 and the cable bushing tank 116 in the switching device 100 comprises: un-bolting the transformer tank 114 from the second bushing 150 by removing the fastening arrangement 152, to disassemble the transformer tank 114 and the cable bushing tank 116 from the circuit-breaker tank 112. This allows both the transformer tank 114 and the cable bushing tank 116 to be disassembled, and respectively be accessed for servicing thereof. With this new arrangement as explained above, a smaller numberof steps would be involved in removal or replacement of current transformer which drastically reduce the service time for the switching device 100.

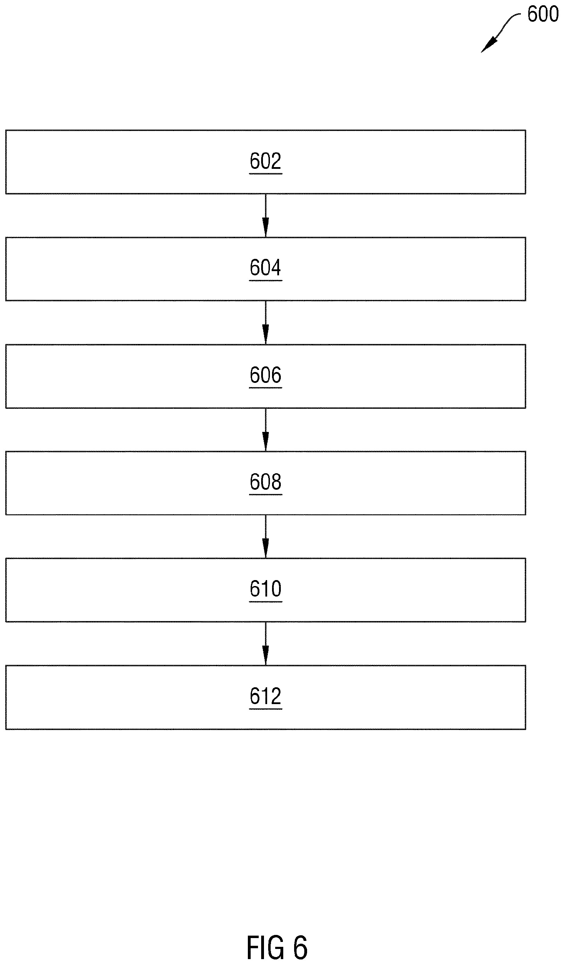

The present invention further provides a method of assembling a switching device, such as the switching device 100 as described in the preceding paragraphs. FIG 6 is a flowchart 600 listing steps involved in a method of assembling the switching device, in accordance with an embodiment of the present disclosure. At step 602, the method comprises providing a bus-bar tank having a first end, with a bushing coupled thereto at the first end thereof. At step 604, the method comprises supporting a stationary contact by the bushing, with the stationary contact adapted to be disposed in electrical connection with a first electrical terminal in the bus-bar tank. At step 606, the method comprises providing a circuit-breaker tank having a first end. At step 608, the method comprises arranging a circuit-breaker arrangement inside the circuit-breaker tank, with the circuit-breaker arrangement adapted to be disposed in electrical connection with a second electrical terminal in the circuit-breaker tank. At step 610, the method comprises removably assembling the bus-bar tank and the circuit-breaker tank, by bolting the first end of the circuit-breaker tank to the bushing using a fastening arrangement, such that the circuit-breaker arrangement is adapted to extend into the bushing, when the bus-bar tank is assembled to the circuit-breaker tank, to be disposed in contact with the stationary contact therein. At step 612, the method comprises filling the bus-bar tank and the circuit-breaker tank with an insulating gas.

The method of assembling a switching device, such as the switching device 100, further includes providing cable bushing tank 116 housing a second electrical terminal 120 and a transformer tank 114 supported over and coupled to the cable bushing tank 116. Herein, the cable bushing tank 116 comprises a conductor 160 disposed in electrical connection with the second electrical terminal 120 and extending out from the cable bushing tank 116. Further, the transformer tank 114 is adapted to receive the conductor 160 therein. The method further comprises removably assembling the transformer tank 114 and the circuit-breaker tank 112 by a second bushing 150, using a fastening arrangement 152. The method further comprises disposing the conductor 160 in electrical connection to the movable contact 132 through the second bushing 150.

With the switching device 100 of the present disclosure, with the use of eco-friendly insulating gas, such as, Sulfur hexafluoride (SF6) free gas or a mixture of carbon dioxide gas and nitrogen gas (CO2N2), gas recovery step as required with conventional arrangements is eliminated, which, in turn, saves considerable time for service and helps keep minimal service time to increase service reliability. That is, with the present switching device, for disassembling any of the tanks, there would be no need to vacuum out and recover the CO2N2 gas as it is clean air and can be directly released in atmosphere.

The present switching device 100 further allows to carry out replacement of the current transformer 154 while keeping the busbar tank live. Due to sliding contact connection between the circuit-breaker tank 112 and disconnector bushing (i.e. the first bushing 122), just disassembling the fastening arrangement 124 would be required, and then the circuit-breaker tank 112 can be slide down for replacement. Similar technique may generally be applied for sliding down the cable bushing tank 116 for servicing thereof as and when required. This is achieved while keeping the overall size of the pole assembly 102, or specifically enclosure 108, of the switching device 100 to be similar to existing size, thus ensuring compatibility with existing products.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the present invention, as defined by the appended claims.

### Reference Numerals

| | |
|---|---|
| switching device | 100 |
| housing | 102 |
| pole assembly | 104 |
| control panel | 106 |
| enclosure | 108 |
| bus-bar tank | 110 |
| first end of bus-bar tank | 110a |
| second end of bus-bar tank | 110b |
| circuit-breaker tank | 112 |
| first end of circuit-breaker tank | 112a |
| second end of circuit-breaker tank | 112b |
| transformer tank | 114 |
| cable bushing tank | 116 |
| first electrical terminal | 118 |
| second electrical terminal | 120 |
| first bushing | 122 |
| fastening arrangement | 124 |
| stationary contact | 126 |
| blade switch | 128 |
| circuit-breaker arrangement | 130 |
| movable contact | 132 |
| rigid conductive member | 134 |
| first end of rigid conductive member | 134a |
| second end of rigid conductive member | 134b |
| actuating arrangement | 136 |
| access cover of bus-bar tank | 140 |
| access cover of circuit-breaker tank | 142 |
| second bushing | 150 |
| fastening arrangement | 152 |
| current transformer | 154 |
| insulation foam | 156 |
| conductor | 160 |
| switching device | 400 |
| bus-bar tank | 402 |
| circuit-breaker tank | 404 |
| flexible connector | 406 |
| stationary contact | 408 |
| movable contact | 410 |
| fasteners | 412 |
| bushing | 414 |
| access cover | 416 |
| access cover | 418 |
| flowchart | 600 |
| step | 602 |
| step | 604 |
| step | 606 |
| step | 608 |
| step | 610 |
| step | 612 |

## Claims

1. A switching device (100) for opening and closing a circuit between a first electrical terminal (118) and a second electrical terminal (120), the switching device (100) comprising:
a bus-bar tank (110) having a first end (110a), the bus-bar tank (110) filled with an insulating gas;
a first bushing (122) coupled to the first end (110a) of the bus-bar tank (110);
a circuit-breaker tank (112) having a first end (112a), the circuit-breaker tank (112) filled with the insulating gas; and
a stationary contact (126) supported by the first bushing (122), the stationary contact (126) adapted to be disposed in electrical connection with the first electrical terminal (118) in the bus-bar tank (110); and
a circuit-breaker arrangement (130) arranged inside the circuit-breaker tank (112), the circuit-breaker arrangement (130) adapted to be disposed in electrical connection with the second electrical terminal (120) therein,
**characterized in that**:
a fastening arrangement (124) is adapted to establish physical connection between the first end (112a) of the circuit-breaker tank (112) and the first bushing (122), to removably assemble the bus-bar tank (110) and the circuit-breaker tank (112), and
the circuit-breaker arrangement (130) is adapted to extend into the first bushing (122), and to be disposed in contact with the stationary contact (126) therein, when the bus-bar tank (110) is assembled to the circuit-breaker tank (112).

2. The switching device (100) as claimed in claim 1, wherein the circuit-breaker arrangement (130) comprises:
a movable contact (132) adapted to be disposed in electrical connection with the second electrical terminal (120) in the circuit-breaker tank (112);
an actuating arrangement (136) configured to reciprocate the movable contact (132) to move linearly inside the circuit-breaker tank (112) to be disposed between a first position and a second position; and
a rigid conductive member (134) having a first end (134a) and a second end (134b), wherein the rigid conductive member (134) is fixedly connected, at the first end (134a) thereof, to the movable contact (132) to reciprocate therewith, the rigid conductive member (134) is adapted to engage in electrical connection with the stationary contact (126) at the second end (134b) thereof, when the movable contact (132) is in the first position to electrically connect the first electrical terminal (118) and the second electrical terminal (120).

3. The switching device (100) as claimed in claim 1, wherein the bus-bar tank (110) comprises an access cover (140) removably fastened thereto.

4. The switching device (100) as claimed in claim 1, wherein the circuit-breaker tank (112) comprises an access cover (142) removably fastened thereto.

5. The switching device (100) as claimed in claim 1 further comprising:
a cable bushing tank (116) housing the second electrical terminal (120), the cable bushing tank (116) comprising a conductor (160) disposed in electrical connection with the second electrical terminal (120) and extending out from the cable bushing tank (116);
a transformer tank (114) supported over and coupled to the cable bushing tank (116), the transformer tank (114) adapted to receive the conductor (160) therein; and
a second bushing (150) adapted to removably assemble the transformer tank (114) and the circuit-breaker tank (112), using a fastening arrangement (152),
wherein the conductor (160) is disposed in electrical connection to the movable contact (132) through the second bushing (150).

6. The switching device (100) as claimed in claim 5, wherein the conductor (160) is cylindrical in shape.

7. The switching device (100) as claimed in claim 1, wherein the first bushing (122) is annular in shape.

8. The switching device (100) as claimed in claim 1, wherein the insulating gas is Sulfur hexafluoride (SF6) free gas.

9. The switching device (100) as claimed in claim 1, wherein the insulating gas is an eco-friendly insulating gas comprising a mixture of carbon dioxide gas and nitrogen gas.

10. A method of servicing the bus-bar tank (110) in the switching device (100) as claimed in claim 3, the method comprising:
un-bolting the first end (112a) of the circuit-breaker tank (112) from the first bushing (122) by removing the fastening arrangement (124), to disassemble the bus-bar tank (110) from the circuit-breaker tank (112); and
removing the access cover (140) from the bus-bar tank (110) to gain access thereinto, for servicing thereof.

11. A method of servicing the circuit-breaker tank (112) in the switching device (100) as claimed in claim 4, the method comprising:
un-bolting the first end (112a) of the circuit-breaker tank (112) from the first bushing (122) by removing the fastening arrangement (124), to disassemble the circuit-breaker tank (112) from the bus-bar tank (110); and
removing the access cover (142) from the circuit-breaker tank (112) to gain access thereinto, for servicing thereof.

12. A method of servicing one or more of the transformer tank (114) and the cable bushing tank (116) in the switching device (100) as claimed in claim 5, the method comprising un-bolting the transformer tank (114) from the second bushing (150) by removing the fastening arrangement (152), to disassemble the transformer tank (114) and the cable bushing tank (116) from the circuit-breaker tank (112).

13. A method (500) of assembling the switching device (100), as claimed in claim 1, the method comprising:
providing a bus-bar tank (110) having a first end (110a), with a first bushing (122) coupled thereto at the first end (110a) thereof;
supporting a stationary contact (126) by the first bushing (122), with the stationary contact (126) adapted to be disposed in electrical connection with a first electrical terminal (118) in the bus-bar tank (110);
providing a circuit-breaker tank (112) having a first end (112a);
arranging a circuit-breaker arrangement (130) inside the circuit-breaker tank (112), with the circuit-breaker arrangement (130) adapted to be disposed in electrical connection with a second electrical terminal (120) in the circuit-breaker tank (112); **characterised by**
removably assembling the bus-bar tank (110) and the circuit-breaker tank (112), by establishing physical connection between the first end (112a) of the circuit-breaker tank (112) and
the first bushing (122) using a fastening arrangement (124), such that the circuit-breaker arrangement (130) is adapted to extend into the first bushing (122), when the bus-bar tank (110) is assembled to the circuit-breaker tank (112), to be disposed in contact with the stationary contact (126) therein; and
filling the bus-bar tank (110) and the circuit-breaker tank (112) with an insulating gas.

14. The method (500) as claimed in claim 13 further comprising:
providing cable bushing tank (116) housing a second electrical terminal (120), the cable bushing tank (116) comprising a conductor (160) disposed in electrical connection with the second electrical terminal (120) and extending out from the cable bushing tank (116);
providing a transformer tank (114) supported over and coupled to the cable bushing tank (116), the transformer tank (114) adapted to receive the conductor (160) therein;
removably assembling the transformer tank (114) and the circuit-breaker tank (112) by a second bushing (150), using a fastening arrangement (152); and
disposing the conductor (160) in electrical connection to the movable contact (132) through the second bushing (150).

15. The method (500) as claimed in claim 13, wherein the insulating gas is an eco-friendly insulating gas comprising a mixture of carbon dioxide gas and nitrogen gas.

## Patentansprüche

1. Schaltvorrichtung (100) zum Öffnen und Schließen eines Stromkreises zwischen einem ersten elektrischen Anschluss (118) und einem zweiten elektrischen Anschluss (120), wobei die Schaltvorrichtung (100) Folgendes umfasst:
einen Sammelschienentank (110) mit einem ersten Ende (110a), wobei der Sammelschienentank (110) mit einem Isoliergas gefüllt ist;
eine erste Durchführung (122), die mit dem ersten Ende (110a) des Sammelschienentanks (110) verbunden ist;
einen Leistungsschaltertank (112) mit einem ersten Ende (112a), wobei der Leistungsschaltertank (112) mit dem Isoliergas gefüllt ist; und
einen stationären Kontakt (126), der von der ersten Durchführung (122) getragen wird, wobei der stationäre Kontakt (126) so ausgelegt ist, dass er in elektrischer Verbindung mit dem ersten elektrischen Anschluss (118) in dem Sammelschienentank (110) angeordnet werden kann; und
eine Leistungsschalteranordnung (130), die im Inneren des Leistungsschaltertanks (112) angeordnet ist, wobei die Leistungsschalteranordnung (130) ausgelegt ist, in elektrischer Verbindung mit dem zweiten elektrischen Anschluss (120) darin angeordnet zu werden,
**dadurch gekennzeichnet, dass**:
eine Befestigungsanordnung (124) ausgelegt ist, eine physische Verbindung zwischen dem ersten Ende (112a) des Leistungsschaltertanks (112) und der ersten Durchführung (122) herzustellen, um den Sammelschienentank (110) und den Leistungsschaltertank (112) lösbar zu montieren, und
die Leistungsschalteranordnung (130) ausgelegt ist, sich in die erste Durchführung (122) zu erstrecken und in Kontakt mit dem darin befindlichen stationären Kontakt (126) angeordnet zu werden, wenn der Sammelschienentank (110) an den Leistungsschaltertank (112) montiert ist.

2. Schaltvorrichtung (100) nach Anspruch 1, wobei die Leistungsschalteranordnung (130) Folgendes umfasst:
einen beweglichen Kontakt (132), der so ausgelegt ist, dass er mit dem zweiten elektrischen Anschluss (120) in dem Leistungsschaltertank (112) in elektrischer Verbindung steht;
eine Betätigungsanordnung (136), die so konfiguriert ist, dass sie den beweglichen Kontakt (132) hin und her bewegt, so dass er sich linear innerhalb des Leistungsschaltertanks (112) bewegt, um zwischen einer ersten Position und einer zweiten Position angeordnet zu werden; und
ein starres leitendes Element (134) mit einem ersten Ende (134a) und einem zweiten Ende (134b),
wobei das starre leitende Element (134) an seinem ersten Ende (134a) fest mit dem beweglichen Kontakt (132) fest verbunden ist, um sich mit diesem hin und her zu bewegen, wobei das starre leitende Element (134) so ausgelegt ist, dass es in eine elektrische Verbindung mit dem stationären Kontakt (126) an seinem zweiten Ende (134b) eingreift, wenn sich der bewegliche Kontakt (132) in der ersten Position befindet, um den ersten elektrischen Anschluss (118) und den zweiten elektrischen Anschluss (120) elektrisch zu verbinden.

3. Schaltvorrichtung (100) nach Anspruch 1, wobei der Sammelschienentank (110) eine daran abnehmbar befestigte Zugangsabdeckung (140) aufweist.

4. Schaltvorrichtung (100) nach Anspruch 1, wobei der Leistungsschaltertank (112) eine daran abnehmbar befestigte Zugangsabdeckung (142) aufweist.

5. Schaltvorrichtung (100) nach Anspruch 1, die ferner Folgendes umfasst:
einen Kabeldurchführungstank (116), der den zweiten elektrischen Anschluss (120) aufnimmt, wobei der Kabeldurchführungstank (116) einen Leiter (160) umfasst, der in elektrischer Verbindung mit dem zweiten elektrischen Anschluss (120) angeordnet ist und sich aus dem Kabeldurchführungstank (116) heraus erstreckt;
einen Transformatortank (114), der über dem Kabeldurchführungstank (116) gestützt und mit diesem gekoppelt ist, wobei der Transformatortank (114) dazu ausgelegt ist, den Leiter (160) darin aufzunehmen; und
eine zweite Durchführung (150), die so beschaffen ist, dass sie den Transformatortank (114) und den Leistungsschaltertank (112) unter Verwendung einer Befestigungsanordnung (152) lösbar zusammenfügt,
wobei der Leiter (160) über die zweite Durchführung (150) in elektrischer Verbindung mit dem beweglichen Kontakt (132) steht.

6. Schaltvorrichtung (100) nach Anspruch 5, wobei der Leiter (160) eine zylindrische Form hat.

7. Schaltvorrichtung (100) nach Anspruch 1, wobei die erste Durchführung (122) ringförmig ist.

8. Schaltvorrichtung (100) nach Anspruch 1, wobei das Isoliergas ein von Schwefelhexafluorid (SF6) freies Gas ist.

9. Schaltvorrichtung (100) nach Anspruch 1, wobei das Isoliergas ein umweltfreundliches Isoliergas ist, das eine Mischung aus Kohlendioxidgas und Stickstoffgas umfasst.

10. Verfahren zur Wartung des Sammelschienentanks (110) in der Schaltvorrichtung (100) nach Anspruch 3, wobei das Verfahren Folgendes umfasst:
Lösen des ersten Endes (112a) des Leistungsschaltertanks (112) von der ersten Durchführung (122) durch Entfernen der Befestigungsanordnung (124), um den Sammelschienentank (110) vom Leistungsschaltertank (112) zu demontieren; und
Entfernen der Zugangsabdeckung (140) vom Sammelschienentank (110), um Zugang zu diesem zu erhalten, um ihn zu warten.

11. Verfahren zur Wartung des Leistungsschaltertanks (112) in der Schaltvorrichtung (100) nach Anspruch 4, wobei das Verfahren Folgendes umfasst:
Lösen des ersten Endes (112a) des Leistungsschaltertanks (112) von der ersten Durchführung (122) durch Entfernen der Befestigungsanordnung (124), um den Leistungsschaltertank (112) vom Sammelschienentank (110) zu demontieren; und
Entfernen der Zugangsabdeckung (142) vom Leistungsschaltertank (112), um Zugang zu diesem zu erhalten, um ihn zu warten.

12. Verfahren zur Wartung des Transformatortanks (114) und/oder des Kabeldurchführungstanks (116) in der Schaltvorrichtung (100) nach Anspruch 5, wobei das Verfahren das Lösen des Transformatortanks (114) von der zweiten Durchführung (150) durch Entfernen der Befestigungsanordnung (152) umfasst, um den Transformatortank (114) und den Kabeldurchführungstank (116) von dem Leistungsschaltertank (112) zu demontieren.

13. Verfahren (500) zum Zusammenbauen der Schaltvorrichtung (100) nach Anspruch 1, wobei das Verfahren Folgendes umfasst:
Bereitstellen eines Sammelschienentanks (110) mit einem ersten Ende (110a), an dessen erstem Ende (110a) eine erste Durchführung (122) angeschlossen ist;
Stützen eines stationären Kontakts (126) durch die erste Durchführung (122), wobei der stationäre Kontakt (126) ausgelegt ist, in elektrischer Verbindung mit einem ersten elektrischen Anschluss (118) in dem Sammelschienentank (110) angeordnet zu werden;
Bereitstellen eines Leistungsschaltertanks (112) mit einem ersten Ende (112a);
Anordnen einer Leistungsschalteranordnung (130) innerhalb des Leistungsschaltertanks (112), wobei die Leistungsschalteranordnung (130) ausgelegt ist, in elektrischer Verbindung mit einem zweiten elektrischen Anschluss (120) in dem Leistungsschaltertank (112) angeordnet zu werden;
durch Folgendes gekennzeichnet:
lösbares Zusammenfügen des Sammelschienentanks (110) und des Leistungsschaltertanks (112) durch Herstellen einer physischen Verbindung zwischen dem ersten Ende (112a) des Leistungsschaltertanks (112) und der ersten Durchführung (122) unter Verwendung einer Befestigungsanordnung (124), so dass die Leistungsschalteranordnung (130) so angepasst ist, dass sie sich in die erste Durchführung (122) erstreckt, wenn der Sammelschienentank (110) mit dem Leistungsschaltertank (112) zusammengebaut ist, um in Kontakt mit dem stationären Kontakt (126) darin angeordnet zu werden; und
Füllen des Sammelschienentanks (110) und des Leistungsschaltertanks (112) mit einem Isoliergas.

14. Verfahren (500) nach Anspruch 13, das ferner Folgendes umfasst:
Bereitstellen eines Kabeldurchführungstanks (116), der einen zweiten elektrischen Anschluss (120) aufnimmt, wobei der Kabeldurchführungstank (116) einen Leiter (160) umfasst, der in elektrischer Verbindung mit dem zweiten elektrischen Anschluss (120) angeordnet ist und sich aus dem Kabeldurchführungstank (116) heraus erstreckt;
Bereitstellen eines Transformatortanks (114), der über dem Kabeldurchführungstank (116) gestützt und mit diesem gekoppelt ist, wobei der Transformatortank (114) dafür ausgelegt ist, den Leiter (160) darin aufzunehmen;
lösbares Zusammenfügen des Transformatortanks (114) und des Leistungsschaltertanks (112) durch eine zweite Durchführung (150) unter Verwendung einer Befestigungsanordnung (152); und Anordnen des Leiters (160) in elektrischer Verbindung mit dem beweglichen Kontakt (132) durch die zweite Durchführung (150).

15. Verfahren (500) nach Anspruch 13, wobei das Isoliergas ein umweltfreundliches Isoliergas ist, das eine Mischung aus Kohlendioxidgas und Stickstoffgas umfasst.

## Revendications

1. Dispositif de commutation (100) pour ouvrir et fermer un circuit entre une première borne électrique (118) et une deuxième borne électrique (120), le dispositif de commutation (100) comprenant :
une cuve de barre omnibus (110) ayant une première extrémité (110a), la cuve de barre omnibus (110) étant remplie d'un gaz isolant ;
une première traversée (122) couplée à la première extrémité (110a) de la cuve de barre omnibus (110) ;
une cuve de disjoncteur (112) ayant une première extrémité (112a), la cuve de disjoncteur (112) étant remplie du gaz isolant ; et
un contact stationnaire (126) supporté par la première traversée (122), le contact stationnaire (126) étant conçu pour être disposé en connexion électrique avec la première borne électrique (118) dans la cuve de barre omnibus (110) ; et
un agencement de disjoncteur (130) agencé à l'intérieur de la cuve de disjoncteur (112), l'agencement de disjoncteur (130) étant conçu pour être disposé en connexion électrique avec la deuxième borne électrique (120) à l'intérieur de celle-ci,
**caractérisé en ce que** :
un agencement de fixation (124) est conçu pour établir une connexion physique entre la première extrémité (112a) de la cuve de disjoncteur (112) et la première traversée (122), pour assembler de manière amovible la cuve de barre omnibus (110) et la cuve de disjoncteur (112), et
l'agencement de disjoncteur (130) est conçu pour s'étendre dans la première traversée (122), et pour être disposé en contact avec le contact stationnaire (126) à l'intérieur de celle-ci, lorsque la cuve de barre omnibus (110) est assemblée sur la cuve de disjoncteur (112).

2. Dispositif de commutation (100) selon la revendication 1, l'agencement de disjoncteur (130) comprenant :
un contact mobile (132) conçu pour être disposé en connexion électrique avec la deuxième borne électrique (120) dans la cuve de disjoncteur (112) ;
un agencement d'actionnement (136) configuré pour faire aller et venir le contact mobile (132) pour se déplacer linéairement à l'intérieur de la cuve de disjoncteur (112) pour être disposé entre une première position et une deuxième position ; et
un élément conducteur rigide (134) ayant une première extrémité (134a) et une deuxième extrémité (134b),
l'élément conducteur rigide (134) étant connecté de manière fixe, au niveau de la première extrémité (134a) de celui-ci, au contact mobile (132) pour aller et venir avec celui-ci, l'élément conducteur rigide (134) étant conçu pour entrer en prise en connexion électrique avec le contact stationnaire (126) au niveau de la deuxième extrémité (134b) de celui-ci, lorsque le contact mobile (132) est dans la première position pour connecter électriquement la première borne électrique (118) et la deuxième borne électrique (120).

3. Dispositif de commutation (100) selon la revendication 1, la cuve de barre omnibus (110) comprenant un capot d'accès (140) fixé de manière amovible à celle-ci.

4. Dispositif de commutation (100) selon la revendication 1, la cuve de disjoncteur (112) comprenant un capot d'accès (142) fixé de manière amovible à celle-ci.

5. Dispositif de commutation (100) selon la revendication 1, comprenant en outre :
une cuve de traversée de câble (116) renfermant la deuxième borne électrique (120), la cuve de traversée de câble (116) comprenant un conducteur (160) disposé en connexion électrique avec la deuxième borne électrique (120) et s'étendant vers l'extérieur depuis la cuve de traversée de câble (116) ;
une cuve de transformateur (114) supportée par-dessus la cuve de traversée de câble (116) et couplée à celle-ci, la cuve de transformateur (114) étant conçue pour recevoir le conducteur (160) à l'intérieur de celle-ci ; et
une deuxième traversée (150) conçue pour assembler de manière amovible la cuve de transformateur (114) et la cuve de disjoncteur (112), en utilisant un agencement de fixation (152), le conducteur (160) étant disposé en connexion électrique avec le contact mobile (132) via la deuxième traversée (150).

6. Dispositif de commutation (100) selon la revendication 5, le conducteur (160) étant de forme cylindrique.

7. Dispositif de commutation (100) selon la revendication 1, la première traversée (122) étant de forme annulaire.

8. Dispositif de commutation (100) selon la revendication 1, le gaz isolant étant le gaz libre d'hexafluorure de soufre (SF6).

9. Dispositif de commutation (100) selon la revendication 1, le gaz isolant étant un gaz isolant éco-responsable comprenant un mélange de gaz dioxyde de carbone et de gaz azote.

10. Procédé d'entretien de la cuve de barre omnibus (110) dans le dispositif de commutation (100) selon la revendication 3, le procédé comprenant :
le déboulonnage de la première extrémité (112a) de la cuve de disjoncteur (112) de la première traversée (122) en retirant l'agencement de fixation (124), pour désassembler la cuve de barre omnibus (110) de la cuve de disjoncteur (112) ; et
le retrait du capot d'accès (140) de la cuve de barre omnibus (110) pour avoir accès à l'intérieur de celle-ci, pour l'entretien de celle-ci.

11. Procédé d'entretien de la cuve de disjoncteur (112) dans le dispositif de commutation (100) selon la revendication 4, le procédé comprenant :
le déboulonnage de la première extrémité (112a) de la cuve de disjoncteur (112) de la première traversée (122) en retirant l'agencement de fixation (124), pour désassembler la cuve de disjoncteur (112) de la cuve de barre omnibus (110) ; et
le retrait du capot d'accès (142) de la cuve de disjoncteur (112) pour avoir accès à l'intérieur de celle-ci, pour l'entretien de celle-ci.

12. Procédé d'entretien de la cuve de transformateur (114) et/ou de la cuve de traversée de câble (116) dans le dispositif de commutation (100) selon la revendication 5, le procédé comprenant le déboulonnage de la cuve de transformateur (114) de la deuxième traversée (150) en retirant l'agencement de fixation (152), pour désassembler la cuve de transformateur (114) et la cuve de traversée de câble (116) de la cuve de disjoncteur (112).

13. Procédé (500) d'assemblage du dispositif de commutation (100), selon la revendication 1, le procédé comprenant :
la fourniture d'une cuve de barre omnibus (110) ayant une première extrémité (110a), avec une première traversée (122) couplée à celle-ci au niveau de la première extrémité (110a) de celle-ci ;
le support d'un contact stationnaire (126) par la première traversée (122), avec le contact stationnaire (126) conçu pour être disposé en connexion électrique avec une première borne électrique (118) dans la cuve de barre omnibus (110) ;
la fourniture d'une cuve de disjoncteur (112) ayant une première extrémité (112a) ;
l'agencement d'un agencement de disjoncteur (130) à l'intérieur de la cuve de disjoncteur (112), avec l'agencement de disjoncteur (130) conçu pour être disposé en connexion électrique avec une deuxième borne électrique (120) dans la cuve de disjoncteur (112) ;
**caractérisé par**
l'assemblage amovible de la cuve de barre omnibus (110) et de la cuve de disjoncteur (112), en établissant une connexion physique entre la première extrémité (112a) de la cuve de disjoncteur (112) et la première traversée (122) en utilisant un agencement de fixation (124), de telle sorte que l'agencement de disjoncteur (130) est conçu pour s'étendre dans la première traversée (122), lorsque la cuve de barre omnibus (110) est assemblée sur la cuve de disjoncteur (112), pour être disposé en contact avec le contact stationnaire (126) à l'intérieur de celle-ci ; et
le remplissage de la cuve de barre omnibus (110) et de la cuve de disjoncteur (112) avec un gaz isolant.

14. Procédé (500) selon la revendication 13, comprenant en outre :
la fourniture d'une cuve de traversée de câble (116) renfermant une deuxième borne électrique (120), la cuve de traversée de câble (116) comprenant un conducteur (160) disposé en connexion électrique avec la deuxième borne électrique (120) et s'étendant vers l'extérieur depuis la cuve de traversée de câble (116) ;
la fourniture d'une cuve de transformateur (114) supportée par-dessus la cuve de traversée de câble (116) et couplée à celle-ci, la cuve de transformateur (114) étant conçue pour recevoir le conducteur (160) à l'intérieur de celle-ci ;
l'assemblage amovible de la cuve de transformateur (114) et de la cuve de disjoncteur (112) par une deuxième traversée (150), en utilisant un agencement de fixation (152) ; et
le fait de disposer le conducteur (160) en connexion électrique avec le contact mobile (132) via la deuxième traversée (150).

15. Procédé (500) selon la revendication 13, le gaz isolant étant un gaz isolant éco-responsable comprenant un mélange de gaz dioxyde de carbone et de gaz azote.
